# EUROPEAN PATENT SPECIFICATION

(11) **EP 0 403 230 B1**
(45) Date of publication and mention of the grant of the patent: **25.05.1994**
(21) Application number: 90306400.4
(22) Date of filing: 12.06.1990
(51) Int. Cl.: F24F 3/16, F24F 6/10

(54) **Fluids cleaner**
Fluidreiniger
Epurateur de fluide

(30) Priority: 15.06.1989 GB 8913757
(43) Date of publication of application: 19.12.1990
(73) Proprietor: Honeywell Control Systems Ltd., Bracknell, Berkshire RG12 1EB (GB)
(72) Inventor: Paul, Ian Andrew, Glasgow, Scotland G64 2DF (GB)
(74) Representative: Fox-Male, Nicholas Vincent Humbert

(56) References cited:
- EP-A- 0 206 171
- EP-A- 0 211 405
- CH-A- 650 325
- DE-A- 3 347 301
- DE-A- 3 623 731
- US-A- 2 825 102

## Description

The present invention relates to electronic apparatus for the cleaning of fluids, especially but not solely for the cleaning of gases, for example air.

Typically, a conventional electronic air cleaner has a two stage electrostatic precipitator cell wherein the air to be cleaned first passes through the ionising section (first stage) in which the particulate matter in the air acquires an electrical charge. It then passes into the collector section (second stage) in which the charged to particles interact with an electric field created by charged plates. The particles are thus driven to, and collide with, the charged plates and in this manner are deposited, or "collected", on the plates. The two stage electrostatic precipitator cell provides a highly efficient means of removal of respirable particles from an air stream, with low pressure drop and low power consumption. This makes it particularly useful for the treatment of air in commercial and domestic premises.

However, the cell forming the collection section has to be regularly removed and cleaned; adhesion of the dirt to the precipitator cell is usually strong thereby requiring immersion of the cell in an aqueous solution of a suitable detergent and then agitation in order to clean effectively the cell. The cell has to be made robust enough to withstand this regular cleaning without damage to the relatively thin and critically spaced blades. Thus the existing type of cell has to be of a relatively expensive and heavy construction and the cleaning is time consuming.

The conventional air cleaner also has an activated carbon filter downstream of the collector section to adsorb gaseous materials from the air stream, especially to remove ozone, produced at the ioniser, and odours.

CH-A-650 325 describes a further type of air cleaner whereby an activated carbon layer maybe optionally applied on to a wire wool surface of the collector plates. However, the activated carbon only plays an ancillary role in the conduction of electricity.

An object of the present invention is to provide an electronic fluids cleaner which overcomes at least some of the above-mentioned disadvantages of the prior art. Thus an object of the present invention may be to provide an electronic fluids cleaner whose collector section is of lower cost than the above-mentioned conventional fluids cleaner. Other objects of the present invention may be to provide an electronic fluids cleaner whose collector section is lighter, and/or more compact, and/or suitable for disposal once dirty rather than for cleaning and re-use.

The present invention provides apparatus for cleansing fluids, the apparatus comprising a first section having means to ionise particles in a stream of fluid passing therethrough and a second section having means to collect ionised particles, characterised by the collector means comprising electrically-conductive means electrically connected to an electrical charge reservoir, the electrically-conductive means consisting of activated carbon alone, the collector means having one or more open-cell bodies comprising the electrically-conductive means to maintain the respective body at a uniform potential and to provide for flow of electric charge between the body and the reservoir.

In this way, the collector means can be produced at such a cost as to ensure that it is feasible to omit repeated cleaning and re-use of the collector means, while ensuring that effective collection of the dirt particles is achieved and is maintained for a considerable period of use.

Preferably, the collector means comprises one or more bodies of open-celled material loaded with activated carbon. Preferably the collector means is, in use, electrically connected to high voltage supply means to provide for ready flow of charge from the collector means; in another embodiment the collector is connected to a capacitative charge storage means.

In a preferred embodiment, the apparatus comprises three elements through which, in use, fluid passes serially within the apparatus, the elements comprising first filter means to remove particles by impaction and/or interception, said ionisation means and second filter means consisting of the collector means. Accordingly, the collector means achieves the functions of the collector section and the subsequent filter of the prior art apparatus, so that a single unit is used instead of two separate units thereby providing advantages in cost reduction, lightness and compactness as well as making it feasible to discard the unit once dirty thereby obviating the necessity of cleaning the collector.

Preferably, at least the body which is the most downstream of the collector means is held, in use, at zero potential.

Preferably, the collector comprises a plurality of bodies which are alternately at high potential and at zero potential.

In order that the invention may more readily be understood, a description is now given, by way of example only, reference being made to the accompanying drawings, in which:-
Figure 1 is a schematic drawing of a conventional air cleaner;
Figure 2 is a schematic diagram of an electronic air cleaner embodying the present invention.
Figures 3 and 4 show other forms of collectors embodying the present invention.

The present invention relates to the collector section of a two stage electrostatic precipitator cell used in air cleaners, and, more particularly, provides a disposable section which combines the properties of an existing collector (i.e. the ability to remove electrically charged particulate matter) with that of the normally separate activated carbon filter which is used to remove odours and ozone.

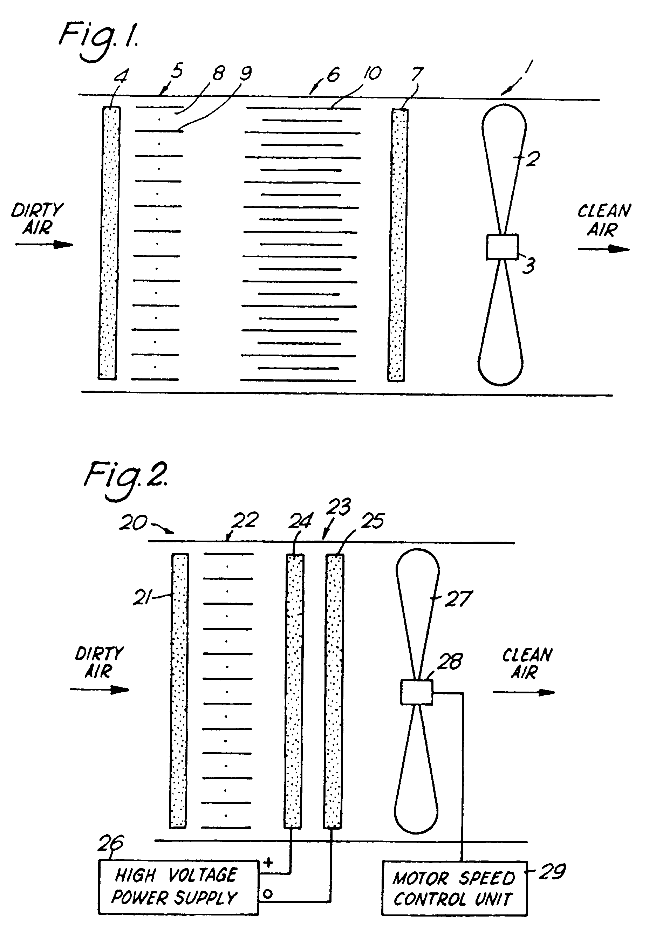

The arrangement of a conventional electronic air cleaner 1 is shown diagrammatically in Figure 1. In operation the fan 2, driven by an electric motor 3, draws dirty air in through filter 4, which is a media-type filter used to remove the larger dust particles by impaction and interception and then on through an electrostatic precipitator cell consisting of an ioniser 5, and a collector 6, and finally through an activated carbon filter 7, before being exhausted as clean air. The ioniser 5 has a series of alternating parallel tensed wires 8 and metal blades 9 placed across the air stream and electrically arranged to ionise the air and consequently charge the particulate matter. The collector 6 consists of a series of parallel metal plates 10 or blades arranged such that an electric field is produced between adjacent plates. Charged particles interact with this field and are driven onto the plates where they adhere and are thus collected. The activated carbon filter 7 is used to adsorb gaseous materials from the airstream, and especially for the removal of odours and for the removal of ozone which is produced in the ionisers.

In normal use filter 4 is regularly removed for cleaning or replacement. The precipitator cell has to be regularly removed and cleaned, especially the collector 6. The adhesion of the dirt is usually strong and immersion of the cell in an aqueous solution of a suitable detergent and agitation is normally required to clean the cell. The cell has to be made robust enough to withstand this regular cleaning without damage to the relatively thin and critically spaced blades. Thus the existing type of cell has to be of a relatively expensive construction and the cleaning is time consuming. The activated carbon filter 7 has to be regularly replaced - as it adsorbs, its effectiveness gradually diminishes and it cannot be reactivated by washing. It is considered to be a disposable item in the air cleaner system.

In the present invention the collector section of the cell and the activated carbon filter are combined to form a low cost, light weight, disposable section.

An activated carbon filter is produced which consists of a sheet of open-celled foam plastic loaded on its surface with activated carbon. Activated carbon is characterised by a very large surface area as a result of the porous structure of the carbon particles which makes it a good adsorber that works well in air cleaning applications. The additional property of the activated carbon which is exploited in this invention is that it is electrically conductive.

The fact that the activated carbon filters in the form described are electrically conductive allows them to be used as charged plates to form a collector section of a two stage precipitator. A diagrammatic arrangement of an air cleaner using such a cell is shown in Figure 2.

Figure 2 shows an electronic air cleaner 20, embodying the present invention, in which the filter 21 is the same as that used in air cleaner 1. The electrostatic precipitator cell now consists of an ioniser 22 similar to the cell of Figure 1 and a collector 23 section of two open-celled sheets 24, 25 of reticulated polyester with 20 pores per inch and loaded with a minimum of 10,000 grams per cubic meter of activated carbon providing a surface area of 900 m² per gram of activated charcoal used. Each sheet is 480mm long by 650mm wide and 9mm thick. An insulating frame (not shown) holds the sheets 24, 25 in a position parallel to one another and 15mm apart across the air stream. The upstream sheet 24 is connected to an external 4.1 kV D.C. power supply 26 and the other sheet 25 to the zero potential of supply 26 such that alternate sheets are at high and zero potential. The arrangement is such that the air carrying charged particles from the ioniser 22 must pass through the open-cell structure of the charged activated carbon sheets 24, 25. The charged particles again interact with the electric field created by the charged sheets and are collected on the sheets 24, 25. The effectiveness of the activated carbon sheets 24, 25 as an adsorber may be reduced by contamination of the dust particles but since two or more sheets are now employed the effective area and dwell time for contact between the activated carbon and the gases to be adsorbed is at least doubled thus offsetting the contamination factor. An air cleaner with the described features is capable of handling 500 to 1000 cubic meters of air per hour, while being much more compact, lighter and more readily maintained in operation than a conventional cleaner.

In similar fashion to cleaner 1, the cleaner 20 has a fan 27 driven by a motor 28 under control of a motor speed control unit 29.

It is important to note that in a collector embodying the present invention the open celled sheets must be electrically conductive; this distinguishes it from charged media filters in which electrical charges are trapped within the structure of an insulating type of material during manufacture and then used to attract electrically charged particles passing through the charged media filter. In a charged media filter the charged particles collected gradually cancel the built-in charges of the media thus reducing the collecting effectiveness. In the present invention, since the sheets are conductive and connected to an external power supply the electrical charge on the sheets is not cancelled or reduced by the collecting process.

Significant advantages of this invention are:-
a) The collector combines the advantages of a simple media filter, the collector stage of an electrostatic precipitator and an activated carbon filter, i.e. it can collect particulate matter by impaction, by interception, and by electrical forces and also remove ozone and odours by adsorbtion.
b) It is light in weight - this simplifies the design, transport and mounting of the air cleaner.
c) It is inexpensive and makes it economically feasible to use it as a disposable rather than a washable item.
d) The construction of the collector of an electrostatic precipitator cell using this method is less critical than that of a conventional collector section.

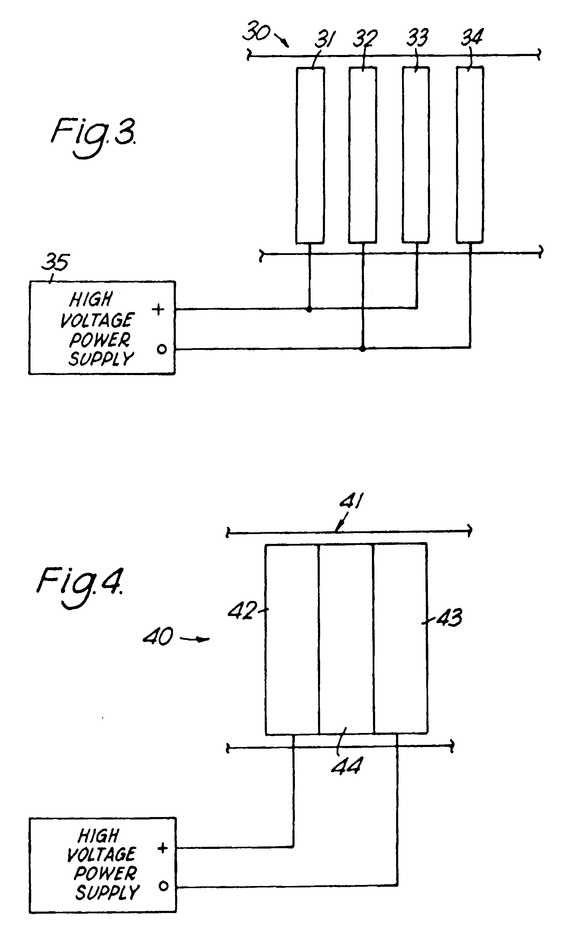

Figure 3 shows another form of collector for use in an air cleaner embodying the present invention. Collector 30 has four sheets 31 to 34 identical to sheets 24, 25 of cleaner 20, each of the sheets 31 to 34 being held in a separate insulating frame (not shown) and positioned such that they lie parallel to one another and spaced 10mm apart across the flow of air directed along the cleaner. Each of the sheets 31 to 34 is electrically connected to an appropriate terminal of the high voltage power supply 35 such that sheets 32 and 34 are at zero potential and sheets 31 and 33 are at 4.1 kV. It is considered that such an arrangement of plates and potentials provides effective operation of the collector and it is advantageous to have sheet 34, namely that which is most downstream in the collector, at zero potential in order to minimise the likelihood of the air exiting the collector being charged. In an alternative arrangement, sheet 31 is held at 4.1 kV, sheet 32 at 2.8 kv, sheet 33 at 1.4 kV and sheet 34 at zero potential. In a further alternative, the collector has a single sheet, identical to sheets 24, 25 of cleaner 20, this sheet being held at 0 potential.

Figure 4 shows a further form of collector for use in an air cleaner embodying the present invention, collector 40 having a single open-celled sheet 41 of reticulated polyester with 20 pores per inch. Each sheet is 480mm long by 650mm wide and 30mm thick. Sheet 41 has been loaded with a minimum of 10,000 grams per cubic meter of activated carbon in two opposing end regions in order to provide two electrically conductive regions 42 and 43 of thickness 10mm sandwiching a central region 44 of thickness 10mm which is not electrically conductive. Region 42 is electrically connected to the 4.1 kV terminal of high voltage power supply 45 while region 43 is electrically connected to the zero potential terminal of supply 45.

Alternative embodiments of the present invention can be provided by using other types of porous or open-cell bodies suitably loaded with activated carbon, or by using bodies consisting solely of activated carbon in an open-cell structure (e.g. setting an admixture of carbon and another material in an open-cell structure and then removing the other material) The voltage values and polarity employed may also be varied according to the materials spacings and construction used.

Typically, equipment for use in domestic or office environments uses ionisers which produce positive charge and the sheets of the collector are positively charged, as a positive corona tends to produce less ozone. However, equipment utilising negative charge often tends to work more effectively, and therefore a negative charge ioniser and negatively charged collector sheets may be used in industrial applications. Clearly, the present application is suited to either form.

## Claims

1. Apparatus for cleansing fluids, the apparatus comprising a first section (22) having means to ionise particles in a stream of fluid passing therethrough and a second section (23) having means to collect ionised particles, characterised by the collector means comprising electrically-conductive means electrically connected to an electrical charge reservoir (26), the electrically-conductive means consisting of activated carbon alone, the collector means having one or more open-cell bodies (24, 25, 31-34, 42, 43) comprising the electrically-conductive means to maintain the respective body at a uniform potential and to provide for flow of electric charge between the body and the reservoir.

2. Apparatus according to Claim 1, characterised in that the collector means comprises one or more bodies (24, 25) of open-celled material loaded with activated carbon.

3. Apparatus according to Claim 1 or 2 characterised in that one or more bodies (24, 25, 31-34, 42, 43) of the collector means is/are, in use, electrically connected to high voltage supply means (26).

4. Apparatus according to Claim 3, characterised in that the high voltage supply means has a value in the range 1 to 10 kV.

5. Apparatus according to any one of the preceding Claims, characterised in that at least the body (34, 43) which is the most downstream of the collector means is held, in use, at zero potential.

6. Apparatus according to any one of the preceding Claims, characterised in that the collector means comprises a plurality of bodies (31-34, 42, 43) alternately at high potential and at zero potential.

7. Apparatus according to any one of the preceding Claims, characterised by three elements through which, in use, fluid passes serially within the apparatus, the elements comprising first filter means (21) to remove particles by impaction and/or interception, said ionisation means (22) and second filter means (23) consisting of the collector means.

8. Apparatus according to any preceding Claim, characterised in that the collector means comprises a body (41) with a plurality of regions (42-44), at least one (42, 43) of which provides a charge path to an electrical charge reservoir and is adjacent at least one region (44) which does not provide a charge path to an electric charge reservoir (26).

9. Apparatus according to Claim 8, characterised in that the collector means comprises a body (41) with two electrically conductive opposing end regions (42, 43) sandwiching a central region (44) which is not electrically conductive.

## Patentansprüche

1. Vorrichtung zum Reinigen von Fluiden, wobei die Vorrichtung aufweist, einen ersten Abschnitt (22) mit Mitteln zum Ionisieren von Partikeln in einem hindurchtretenden Fluidstrom und einen zweiten Abschnitt (23) mit einer Einrichtung zum Sammeln von ionisierten Partikeln, **dadurch gekennzeichnet,** daß die Sammeleinrichtung eine elektrisch leitende Einrichtung umfaßt, die an einen elektrischen Ladungsspeicher (26) angeschlossen ist, daß die elektrisch leitende Einrichtung aus Aktivkohle alleine besteht, daß die Sammeleinrichtung einen oder mehrere Körper (24,25,31-34,42,43) mit offenen Zellen besitzt, die die elektrisch leitende Einrichtung umfassen, um den entsprechenden Körper auf einem gleichförmigen Potential zu halten und einen elektrischen Ladungsfluß zwischen dem Körper und dem Speicher vorzugeben.

2. Vorrichtung nach Anspruch 1, **dadurch gekennzeichnet,** daß die Sammeleinrichtung einen oder mehrere Körper (24,25,31-34,42,43) aus Material mit offenen Zellen umfaßt, die mit der Aktivkohle geladen sind.

3. Vorrichtung nach Anspruch 1 oder 2, **dadurch gekennzeichnet,** daß ein oder mehrere Körper (24,25,31-34,42,43) der Sammeleinrichtung im Gebrauch elektrisch mit einer Hochspannungs-Versorgungseinrichtung (26) verbunden ist/sind.

4. Vorrichtung nach Anspruch 3, **dadurch gekennzeichnet,** daß die Hochspannungs-Versorgungseinrichtung eine Größe im Bereich von 1 bis 10 kV aufweist.

5. Vorrichtung nach irgendeinem der vorangehenden Ansprüche, **dadurch gekennzeichnet,** daß wenigstens der am weitesten stromabwärts gelegene Körper (34,43) der Sammeleinrichtung im Gebrauch auf Nullpotential gehalten wird.

6. Vorrichtung nach irgendeinem der vorangehenden Ansprüche, **dadurch gekennzeichnet,** daß die Sammeleinrichtung mehrere Körper (31-34,42,43) aufweist, die sich abwechselnd auf hohem Potential und Nullpotential befinden.

7. Vorrichtung nach irgendeinem der vorangehenden Ansprüche, **gekennzeichnet durch** drei Elemente, durch welche im Gebrauch Fluid der Reihe nach in der Vorrichtung hindurchtritt, wobei die Elemente die erste Filtereinrichtung (21) zum Entfernen von Partikeln durch Auftreffen und/oder Abfangen, die Ionisationseinrichtung (22) und die aus der Sammeleinrichtung bestehende zweite Filtereinrichtung (23) umfassen.

8. Vorrichtung nach irgendeinem der vorangehenden Ansprüche, **dadurch gekennzeichnet,** daß die Sammeleinrichtung einen Körper (41) mit mehreren Bereichen (42-44) umfaßt, von denen wenigstens einer (42,43) eine Ladungsstrecke zu einem elektrischen Ladungsspeicher vorgibt und wenigstens einem Bereich (44) benachbart ist, der keine Ladungsstrecke zu einem elektrischen Ladungsspeicher (26) vorgibt.

9. Vorrichtung nach Anspruch 8, **dadurch gekennzeichnet,** daß die Sammeleinrichtung einen Körper (41) mit zwei elektrisch leitenden, sich gegenüberliegenden Endbereichen (42,43) vorgibt, die einen zentralen Bereich (44) zwischen sich einschließen, der elektrisch nicht leitend ist.

## Revendications

1. Appareil destiné à nettoyer des fluides, l'appareil comportant une première section (22) ayant des moyens destinés à ioniser des particules dans un courant de fluide passant au travers et une deuxième section (23) ayant des moyens destinés à collecter des particules ionisées, caractérisé en ce que les moyens de collecte comportent des moyens électriquement conducteurs reliés électriquement à un réservoir de charge électrique (26), les moyens électriquement conducteurs se composant de charbon actif seul, les moyens de collecte ayant un ou plusieurs corps à cellule ouverte (24, 25, 31 à 34, 42, 43) comportant les moyens électriquement conducteurs afin de maintenir le corps respectif à un potentiel uniforme et afin d'assurer un écoulement de charge électrique entre le corps et le réservoir.

2. Appareil selon la revendication 1, caractérisé en ce que les moyens de collecte comportent un ou plusieurs corps (24, 25) en matière à cellule ouverte chargée avec du charbon actif.

3. Appareil selon la revendication 1 ou 2, caractérisé en ce que un ou plusieurs corps (24, 25, 31 à 34, 42, 43) des moyens de collecte sont reliés électriquement à des moyens d'alimentation à haute tension (26) en service.

4. Appareil selon la revendication 3, caractérisé en ce que les moyens d'alimentation à haute tension ont une valeur située dans la plage de 1 à 10 kV.

5. Appareil selon l'une quelconque des revendications précédentes, caractérisé en ce que au moins le corps (34, 43) qui est le plus en aval des moyens de collecte est maintenu à un potentiel nul en service.

6. Appareil selon l'une quelconque des revendications précédentes, caractérisé en ce que les moyens de collecte comportent plusieurs corps (31 à 34, 42, 43) alternativement à un potentiel élevé et un potentiel nul.

7. Appareil selon l'une quelconque des revendications précédentes, caractérisé par trois éléments à travers lesquels passe du fluide en série dans l'appareil en service, les éléments comportant des premiers moyens de filtrage (21) destinés à enlever des particules par impact et/ou interception, lesdits moyens d'ionisation (22) et des seconds moyens de filtrage (23) constituant les moyens de collecte.

8. Appareil selon l'une quelconque des revendications précédentes, caractérisé en ce que les moyens de collecte comportent un corps (41) avec plusieurs zones (42 à 44), dont au moins une (42, 43) assure un passage de charge vers un réservoir de charge électrique et est adjacente à au moins une zone (44) qui n'assure pas un passage de charge vers un réservoir de charge électrique (26).

9. Appareil selon la revendication 8, caractérisé en ce que les moyens de collecte comportent un corps (41) avec deux zones d'extrémité opposées électriquement conductrices (42, 43) qui enserrent une zone centrale (44) qui n'est pas électriquement conductrice.
